# EUROPEAN PATENT APPLICATION

(11) **EP 4 656 895 A1**
(43) Date of publication of application: **03.12.2025**
(21) Application number: 23919833.6
(22) Date of filing: 21.09.2023
(51) Int. Cl.: F16D 3/64

(54) **POWER TRANSMISSION COUPLING**

(30) Priority: 02.02.2023 JP 2023014555
(71) Applicant: Mitsubishi Heavy Industries, Ltd., Tokyo 100-8332 (JP)
(72) Inventor: KATO, Motoki, Tokyo 100-8332 (JP); MIZUNO, Kotoyo, Tokyo 100-8332 (JP); SHIMIZU, Takayuki, Tokyo 100-8332 (JP); YANOBU, Yukihide, Tokyo 100-8332 (JP); TANIMOTO, Koshi, Tokyo 100-8332 (JP)
(74) Representative: Studio Torta S.p.A.
(86) International application number: PCT/JP2023/034302
(87) International publication number: WO 2024/161697

(57) **Abstract**

The power transmission coupling of the present disclosure comprises a plurality of joint plates that each extend planarly in a direction perpendicular to an axis and that are spaced apart from each other in the axis direction, elastic bodies each provided at a position in the axial direction between the opposing surfaces of a pair of mutually adjacent joint plates, and joining parts that are provided in the joint plates and that connect the joint plates and the elastic bodies. The elastic bodies each have an extending part that extends along the outer peripheral edges of a pair of joint plates on the radial outer side of the axis line from the pair of joint plates, a first end provided on one side in the extending direction of the extending part and joined to one of the pair of joint plates by a joining part, and a second end provided on the other side in the extending direction of the extending part and joined to the other of the pair of joint plates by a joining part.

## Description

### Technical Field

The present disclosure relates to a power transmission joint.

Priority is claimed on Japanese Patent Application No. 2023-014555, filed February 2, 2023, the content of which is incorporated herein by reference.

### Background Art

PTL 1 discloses a cardan-type bogie for a railway vehicle. In the bogie of Patent PTL 1, a main motor shaft of a main motor (motor) and an axle (driven shaft) are connected to each other via a gear joint device and a gear device for deceleration. A torque of the motor is transmitted to the driven shaft via the main electric motor shaft, the gear joint device, and the gear device.

### Citation List

### Patent Literature

[PTL 1] Japanese Unexamined Patent Application Publication No. 2019-27564

### Summary of Invention

### Technical Problem

While the vehicle is traveling, the driven shaft is subjected to impact or vibration from the vehicle body or the ground. Accordingly, the driven shaft is displaced in the up-down direction or the axis direction. In addition, during boarding, the entire vehicle sinks due to an increase in the number of occupants, and during alighting, the entire vehicle rises due to a decrease in the number of occupants. In this way, the entire vehicle sinks and rises due to the boarding and alighting of the occupants, and thus the driven shaft is greatly displaced in the up-down direction. In the technique disclosed in PTL 1, there is a case where the displacements occurring in the driven shaft cannot be sufficiently absorbed, and the torque transmission of the motor is not performed properly.

The present disclosure has been made to solve the above-described problems, and an object of the present disclosure is to provide a power transmission joint that can favorably transmit a torque of a motor to a driven shaft while favorably absorbing a displacement of the driven shaft.

### Solution to Problem

In order to solve the above problems, a power transmission joint according to the present disclosure that connects a drive shaft configured to rotate by receiving driving of a motor including a rotor and a driven shaft that is at least partially disposed at a position spaced apart from the drive shaft in an axis direction of the drive shaft, the power transmission joint includes a plurality of joint plates that each extend in a planar shape in a direction perpendicular to an axis and that are provided at intervals in the axis direction, elastic bodies that are each provided at a position in the axis direction between facing surfaces of a pair of the joint plates adjacent to each other, and a joining portion that is provided in each of the joint plates and that joins the joint plate and the elastic body to each other, in which among the plurality of joint plates, the joint plate that is closest to the motor in the axis direction is fixed to the drive shaft, and the joint plate that is farthest from the motor in the axis direction is fixed to the driven shaft, and the elastic body includes an extending portion that extends along outer peripheral edge portions of the pair of joint plates on a radial outer side of the axis with respect to the pair of joint plates, a first end that is provided on one side in an extending direction of the extending portion and that is joined to one of the pair of joint plates by the joining portion, and a second end that is provided on the other side in the extending direction of the extending portion and that is joined to the other of the pair of joint plates by the joining portion.

### Advantageous Effects of Invention

With the power transmission joint of the present disclosure, the torque of the motor can be favorably transmitted to the driven shaft while favorably absorbing the displacement of the driven shaft.

### Brief Description of Drawings

Fig. 1 is a schematic view of a bogie according to a first embodiment of the present disclosure as viewed from a traveling direction.
Fig. 2 is a perspective view of a power transmission joint according to the first embodiment of the present disclosure.
Fig. 3 is an exploded perspective view of the power transmission joint according to the first embodiment of the present disclosure.
Fig. 4 is a cross-sectional view of the power transmission joint according to the first embodiment of the present disclosure taken along an axis direction.
Fig. 5 is a view of a joint plate and a joining portion according to the first embodiment of the present disclosure as viewed from a radial outer side.
Fig. 6 is a perspective view of a plurality of joint plates according to a modification example of the first embodiment of the present disclosure.
Fig. 7 is an exploded perspective view of a joining portion according to the modification example of the first embodiment of the present disclosure.
Fig. 8 is a plan view of the joining portion according to the modification example of the first embodiment of the present disclosure as viewed from the axis direction.
Fig. 9 is a cross-sectional view taken along line IX-IX in Fig. 8.
Fig. 10 is a cross-sectional view taken along line X-X in Fig. 8.
Fig. 11 is a view of a joint plate and a joining portion according to a second embodiment of the present disclosure as viewed from the radial outer side.
Fig. 12 is a perspective view of a plurality of joint plates according to a first modification example of the second embodiment of the present disclosure.
Fig. 13 is a view of a joint plate and a joining portion according to a second modification example of the second embodiment of the present disclosure as viewed from the radial outer side.
Fig. 14 is a perspective view of a plurality of the joint plates according to the second modification example of the second embodiment of the present disclosure. Description of Embodiments

### <First Embodiment>

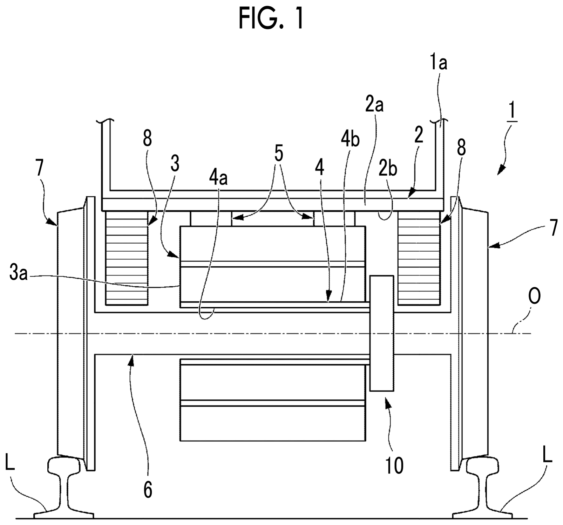

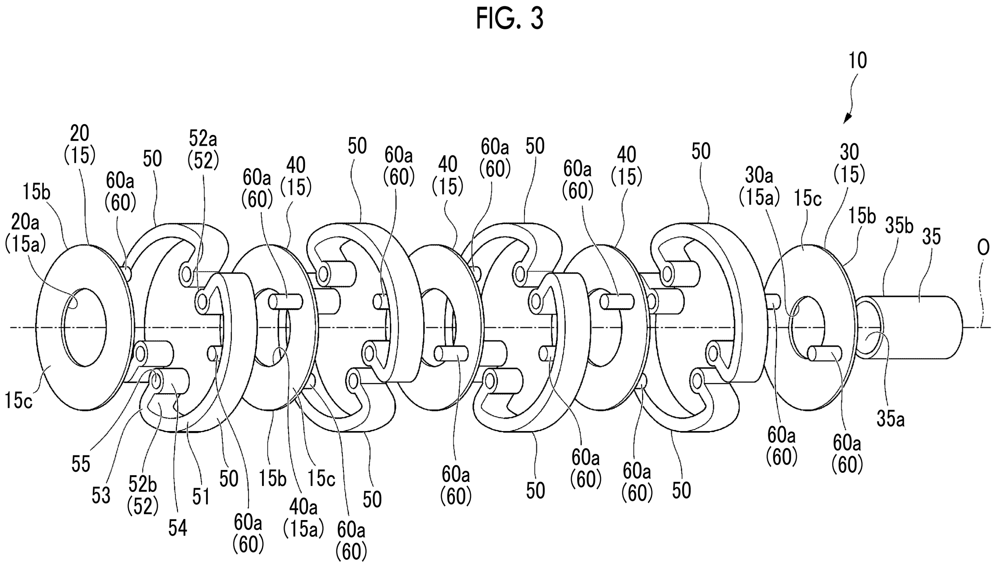

Hereinafter, a power transmission joint 10 according to a first embodiment of the present disclosure will be described with reference to Figs. 1 to 5.

As shown in Fig. 1, the power transmission joint 10 of the present embodiment is mounted on a vehicle 1.

### (Vehicle)

In the present embodiment, a case where the vehicle 1 is a railway vehicle will be described as an example. The vehicle 1 includes a vehicle body 1a and a bogie 2. A space for boarding and alighting of occupant is provided inside the vehicle body 1a. The vehicle body 1a is placed on the bogie 2.

### (Bogie)

The bogie 2 supports the vehicle body 1a from below and travels on a rail L along the ground. The rail L extends in one direction. A pair of the rails L are provided to face each other in a direction perpendicular to the longitudinal direction of the rail L. The bogie 2 includes a bogie frame 2a, a motor 3, a drive shaft 4, an axle (driven shaft) 6, a wheel 7, an axle spring 8, and the power transmission joint 10.

### (Bogie Frame)

The bogie frame 2a is spaced upward from a rail L along the ground. The bottom portion 2b of the bogie frame 2a extends in the horizontal direction. The bottom portion 2b of the bogie frame 2a extends in the longitudinal direction of the rail L.

### (Motor)

The motor 3 is a direct drive-type motor. The motor 3 is attached to a lower surface of the bottom portion 2b of the bogie frame 2a via a motor suspension portion 5. The motor 3 includes a rotor 3a.

### (Rotor)

The rotor 3a is formed in a cylindrical shape extending in a horizontal direction and in a direction perpendicular to the longitudinal direction of the rail L.

### (Drive Shaft)

The drive shaft 4 is inserted into the rotor 3a. The drive shaft 4 is a hollow shaft formed in a cylindrical shape and extending in a horizontal direction and in a direction perpendicular to the longitudinal direction of the rail L. An outer peripheral surface 4b of the drive shaft 4 is fixed to an inner peripheral surface of the rotor 3a. The drive shaft 4 rotates around an axis O of the drive shaft 4 by receiving the driving of the motor 3. The drive shaft 4 is formed of a metal material.

Hereinafter, the axis O of the drive shaft 4 will be simply referred to as an "axis O", a radial direction of the axis O will be simply referred to as a "radial direction", and a circumferential direction of the axis O will be simply referred to as a "circumferential direction". An axis O direction is perpendicular to the longitudinal direction of the rail L.

One end portion of the drive shaft 4 in the axis O direction is located on an outer side of the rotor 3a in the axis O direction.

### (Axle)

The axle 6 is formed in a circular columnar shape. The axle 6 is formed of a metal material. The axle 6 is inserted into the drive shaft 4. The motor 3 is located at an intermediate portion of the axle 6 in the axis O direction. That is, the axle 6 is disposed coaxially with the drive shaft 4. The axle 6 is disposed at least partially at a position spaced apart from the drive shaft 4 in the axis O direction of the drive shaft 4. In the present embodiment, the intermediate portion of the axle 6 in the axis O direction is disposed at a position overlapping with the drive shaft 4 in the radial direction, and both end portions of the axle 6 in the axis O direction are disposed at positions spaced apart from the drive shaft 4 in the axis O direction.

The axle 6 is disposed to be separated from an inner peripheral surface 4a of the drive shaft 4. A torque around the axis O is transmitted from the motor 3 to the axle 6 via the drive shaft 4 and the power transmission joint 10. The axle 6 rotates around the axis O by the torque of the motor 3. A pair of the wheels 7 facing each other in the axis O direction are provided at both end portions of the axle 6 in the axis O direction. The axle spring 8 is provided between the axle 6 and the bogie frame 2a.

### (Wheel)

The wheel 7 is disposed at a position spaced apart from the motor 3 in the axis O direction. The wheel 7 is formed in a disk shape. A plate thickness direction of the wheel 7 coincides with the axis O direction. The wheel 7 is connected to an end portion of the axle 6 at a central portion. The wheel 7 is fixed to the axle 6. Each wheel 7 is in contact with the rail L at a lower end portion. The wheel 7 rotationally moves on the rail L by a torque transmitted from the axle 6.

### (Axle Spring)

The axle spring 8 absorbs vibration in the up-down direction. The axle spring 8 is provided at a position close to the wheel 7. The axle spring 8 is a coil spring extending in the up-down direction. An upper end of the axle spring 8 is fixed to the bottom portion 2b of the bogie frame 2a. A lower end of the axle spring 8 is connected to the axle 6 via a connection member (not shown). The axle spring 8 is provided such that the torque of the motor 3 is not transmitted from the axle 6 by the connection member. A pair of the axle springs 8 are provided on both outer sides with respect to the motor 3 in the axis O direction. The power transmission joint 10 is provided between one axle spring 8 of the pair of the axle springs 8 and the motor 3.

### (Power Transmission Joint)

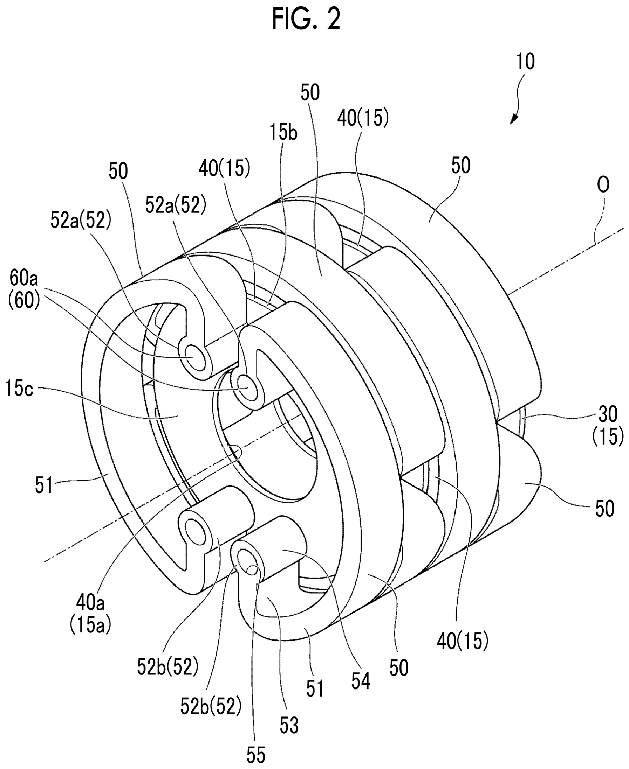

The power transmission joint 10 connects the drive shaft 4 and the axle 6 to each other to transmit the torque of the motor 3 to the axle 6. The power transmission joint 10 is provided between the motor 3 and the wheel 7. As shown in Figs. 2 to 5, the power transmission joint 10 includes a joint plate 15, a fixed cylinder 35, an elastic body 50, and a joining portion 60.

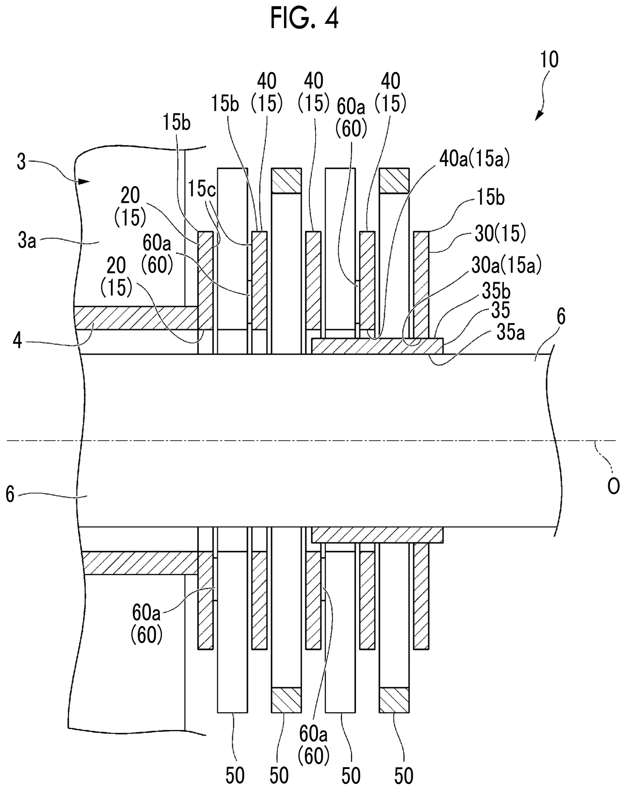

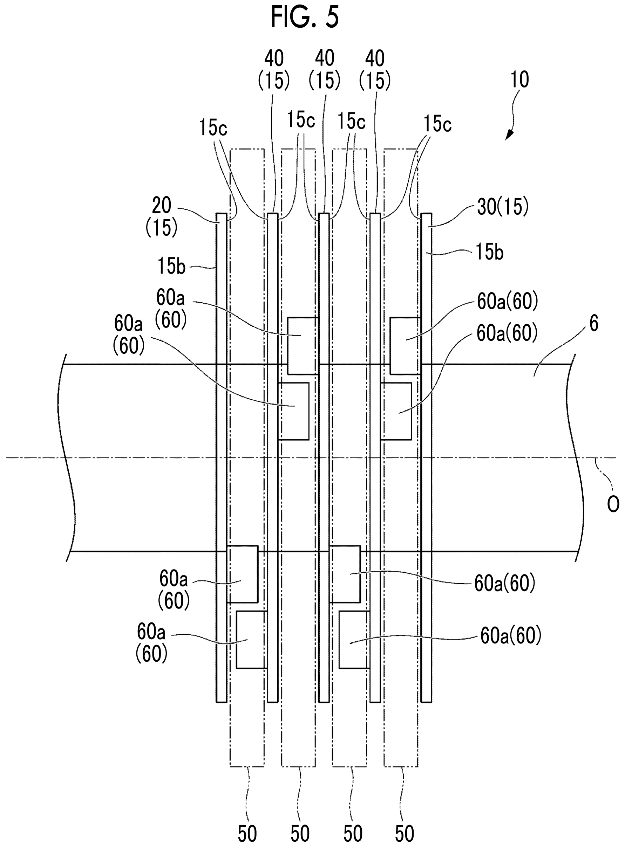

In Fig. 2, a motor-side joint plate 20, which will be described later, is omitted from the joint plate 15. In Fig. 4, the arrangement of the joint plates 15, the joining portions 60, and the elastic bodies 50 is schematically shown. In Fig. 5, the shape of the joint plates 15 and the arrangement of the joining portions 60 are schematically shown, and the positions of the elastic bodies 50 are shown by a virtual line.

### (Joint Plate)

A plurality of the joint plates 15 are provided between the motor 3 and the wheels 7 at intervals in the axis O direction. In the present embodiment, the plurality of joint plates 15 are arranged at equal intervals in the axis O direction. The plurality of joint plates 15 each extend in a planar shape in a direction perpendicular to the axis O. More specifically, each of the joint plates 15 is formed in a flat plate shape having a constant plate thickness in the radial direction and the circumferential direction, the flat plate shape being perpendicular to the axis O. The joint plate 15 is formed in an annular shape as viewed from the axis O direction. The central axis of the joint plate 15 extends along the axis O. That is, the axle 6 is inserted into each of the joint plates 15 in the axis O direction. An inner peripheral edge portion 15a of the joint plate 15 is located on the radial outer side with respect to an outer peripheral surface 6b of the axle 6, and an outer peripheral edge portion 15b of the joint plate 15 is located on the radial outer side with respect to the outer peripheral surface 4b of the drive shaft 4. In the present embodiment, the outer peripheral edge portions 15b of the plurality of joint plates 15 are all formed to have substantially the same length. In addition, the joint plate 15 is formed of a metal material. The plurality of joint plates 15 include the motor-side joint plate 20, an axle-side joint plate (driven shaft-side joint plate) 30, and an intermediate body 40.

### (Motor-side Joint Plate)

The motor-side joint plate 20 is the joint plate 15 that is closest to the motor 3 in the axis O direction among the plurality of joint plates 15. The motor-side joint plate 20 is provided between the motor 3 and the wheel 7. The motor-side joint plate 20 is fixed to the drive shaft 4 to which the driving force of the motor 3 is transmitted. More specifically, the motor-side joint plate 20 is fixed to an end portion of the drive shaft 4 in the axis O direction and is integrated with the drive shaft 4.

An inner peripheral edge portion 20a of the motor-side joint plate 20 is located on the radial outer side with respect to the outer peripheral surface 6b of the axle 6. Therefore, the motor-side joint plate 20 is movable relative to the axle 6 in the axis O direction and the radial direction. An axle-side joint plate 30 is provided between the motor-side joint plate 20 and the wheel 7.

### (Axle-side Joint Plate)

The axle-side joint plate 30 is the joint plate 15 that is the farthest from the motor 3 side in the axis O direction among the plurality of joint plates 15. The axle-side joint plate 30 is provided on a side opposite to the motor 3 with the motor-side joint plate 20 interposed therebetween. That is, the axle-side joint plate 30 faces the motor-side joint plate 20 in the axis O direction.

In addition, the fixed cylinder 35 is provided on the radial inner side of the axle-side joint plate 30, and the intermediate body 40 is provided between the axle-side joint plate 30 and the motor-side joint plate 20.

### (Fixed Cylinder)

The fixed cylinder 35 is formed in a cylindrical shape extending in the axis O direction. That is, the axle 6 is inserted into the fixed cylinder 35 in the axis O direction. An outer peripheral surface 35b of the fixed cylinder 35 is fixed to an inner peripheral edge portion 30a (the inner peripheral edge portion 15a) of the axle-side joint plate 30, and an inner peripheral surface 35a of the fixed cylinder 35 is press-fitted and fixed to the outer peripheral surface 6b of the axle 6. The fixed cylinder 35 is provided in a radial inner side portion of the axle-side joint plate 30. The fixed cylinder 35 overlaps the axle-side joint plate 30 in the radial direction at an intermediate portion in the axis O direction. The axle-side joint plate 30 is press-fitted and fixed to the outer peripheral surface 6b of the axle 6 in a stable state by the fixed cylinder 35.

### (Intermediate Body)

An inner peripheral edge portion 40a of the intermediate body 40 is located on the radial outer side with respect to the outer peripheral surface 6b of the axle 6. For this reason, the intermediate body 40 is movable relative to the axle 6 in the axis O direction and the radial direction, as in the case of the motor-side joint plate 20.

### (Elastic Body)

A plurality of the elastic bodies 50 are provided between the motor-side joint plate 20 and the axle-side joint plate 30 in the axis O direction. The plurality of elastic bodies 50 are each provided at a position in the axis O direction between facing surfaces 15c of a pair of the joint plates 15 adjacent to each other. In the present embodiment, two elastic bodies 50 are provided at a position in the axis O direction between a pair of the joint plates 15 adjacent to each other. That is, two elastic bodies 50 are provided at the same position in the axis O direction. The two elastic bodies 50 disposed at the same position in the axis O direction are disposed at positions symmetrical in the radial direction with respect to the axis O.

The elastic body 50 has an extending portion 51 and an end portion 52. The extending portion 51 extends along the outer peripheral edge portions 15b of the pair of joint plates 15 on the radial outer side with respect to the outer peripheral edge portions 15b of the pair of joint plates 15 located on both outer sides in the axis O direction. The extending portion 51 is formed in an arc shape extending in the circumferential direction. That is, the extending direction of the extending portion 51 coincides with the circumferential direction.

The extending portion 51 of the present embodiment is a leaf spring having a plate thickness in the radial direction. The extending portion 51 extends in an arc shape in the circumferential direction around the axis O. The extending portion 51 shown in the drawing is merely an example. The length of the extending portion 51 can be appropriately changed.

The end portions 52 are provided at both ends of the extending portion 51 in the extending direction. The end portion 52 has a connecting portion 53 and an attachment portion 54. The connecting portion 53 extends in a straight line from one end toward the other end of the extending portion 51. The attachment portion 54 is located on the radial inner side with respect to the extending portion 51. The attachment portion 54 is connected to the extending portion 51 by the connecting portion 53.

In the present embodiment, the outer shape of the attachment portion 54 is formed in a circular shape as viewed from the axis O direction. A circular insertion hole 55 penetrating the attachment portion 54 in the axis O direction is formed in the attachment portion 54. The joining portion 60, which will be described later, is inserted into the insertion hole 55.

In the present embodiment, the elastic bodies 50 described above are disposed such that the elastic bodies 50 are rotated about the axis O by approximately 90 degrees from one side toward the other side in the axis O direction.

In addition, hereinafter, of the two end portions 52 on both sides of the extending portion 51 in the extending direction, the one provided on one side of the extending portion 51 in the extending direction will be referred to as a first end 52a, and the one provided on the other side of the extending portion 51 in the extending direction will be referred to as a second end 52b. The first end 52a and the second end 52b have the same configuration. The attachment portion 54 of the first end 52a is joined to one of the pair of joint plates 15 by the joining portion 60 to be described later. The attachment portion 54 of the second end 52b is joined to the other of the pair of joint plates 15 by the joining portion 60 to be described later.

### (Joining Portion)

The joining portions 60 are provided in each of the joint plates 15 and connect the joint plate 15 and the elastic body 50. One joining portion 60 is provided for each end portion 52 of the elastic body 50 in the extending direction.

In the present embodiment, the joining portion 60 is a pin 60a that protrudes in the axis O direction from the facing surface 15c of the joint plate 15. The pins 60a are inserted into the insertion holes 55 of the elastic bodies 50. In this manner, each end portion 52 of the elastic body 50 is fixed to the joint plate 15. The elastic body 50 may be pin-joined to the joint plate 15 by the pin 60a, and the elastic body 50 may be slightly rotatable around the pin 60a.

In the present embodiment, the joining portions 60 described above are disposed as in the elastic bodies 50 such that the joining portions 60 are rotated about the axis O by approximately 90 degrees from one side toward the other side in the axis O direction. In addition, as shown in Fig. 5, the joining portions 60 disposed on the facing surfaces 15c on the opposite sides of the pair of adjacent joint plates 15 at the position in the axis O direction between the joint plates 15 are disposed to be adjacent to each other in the circumferential direction.

### (Operation and Effect)

Hereinafter, the operation and effect of the present embodiment will be described.

First, torque transmission by the power transmission joint 10 will be described. When the motor 3 is driven, the torque of the motor 3 is first transmitted to the power transmission joint 10. The power transmission joint 10 rotates around the axis O integrally with the drive shaft 4. The power transmission joint 10 is fixed to the axle 6. For this reason, the axle 6 rotates around the axis O integrally with the power transmission joint 10. In this way, the driving force of the motor 3 is transmitted to the axle 6 via the power transmission joint 10.

Subsequently, displacement absorption by the power transmission joint 10 will be described.

For example, while the vehicle 1 is traveling, an impact load is applied to the axle 6 from the vehicle body 1a or the rail L. The axle 6 is displaced in the up-down direction, the traveling direction of the vehicle 1, and the axis direction due to the received impact. In addition, during boarding, the entire vehicle 1 sinks due to an increase in the number of occupants, and during alighting, the entire vehicle 1 rises due to a decrease in the number of occupants. In this way, the entire vehicle 1 sinks and rises due to the boarding and alighting of the occupants, and thus the axle 6 is greatly displaced in the up-down direction.

The power transmission joint 10 can absorb dynamic displacements of the axle 6 that occur while the vehicle 1 is traveling, and static displacements of the axle 6 that occur due to the boarding and alighting of the occupants.

For example, when the axle 6 is displaced in the up-down direction or the traveling direction, the extending portion 51 of the elastic body 50 is elastically deformed in the radial direction, so that the displacement in the up-down direction or the displacement in the traveling direction is absorbed.

In addition, for example, when the axle 6 is displaced in the axis O direction, the extending portion 51 of the elastic body 50 is elastically deformed in the axis O direction. Further, the plurality of joint plates 15 connected by the elastic body 50 expand and contract in the axis O direction. In this manner, the displacement in the axis O direction is absorbed.

Further, in the present embodiment, the extending portion 51 is located on the radial outer side with respect to the joint plate 15. Therefore, it is possible to suppress contact with the pair of joint plates located on both sides in the axis O direction at the time of deformation. Therefore, according to the present embodiment, the torque of the motor can be satisfactorily transmitted to the axle 6 while satisfactorily absorbing the displacement of the axle 6.

In the present embodiment, the joining portion 60 is provided on the facing surface 15c of the joint plate 15.

Accordingly, the joining portion 60 can be reduced in size in the radial direction as compared with a case where the joining portion 60 is provided on the outer peripheral side of the joint plate 15.

In the present embodiment, the joining portion 60 is a pin 60a extending in the axis direction, and the first end 52a and the second end 52b include insertion holes 55 into which the joining portion 60 is inserted.

Accordingly, the joining portion 60 and the elastic body 50 can have a simple structure. Therefore, manufacturing efficiency can be improved and manufacturing costs can be reduced.

### <Modification Example of First Embodiment>

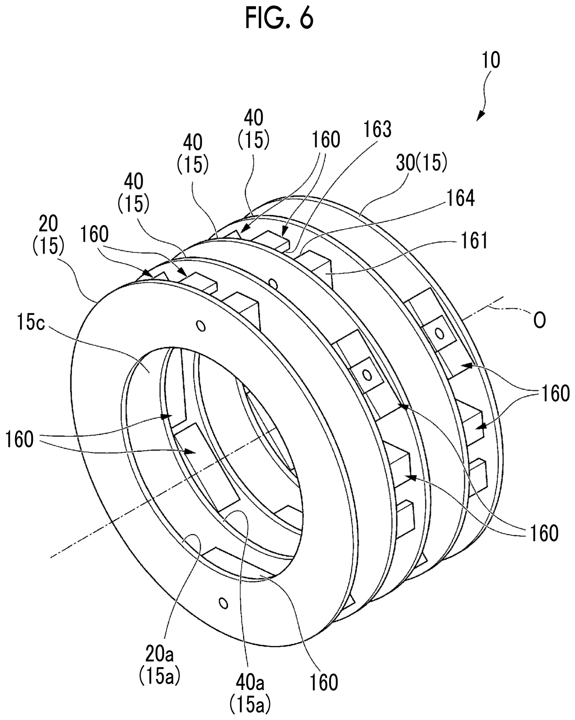

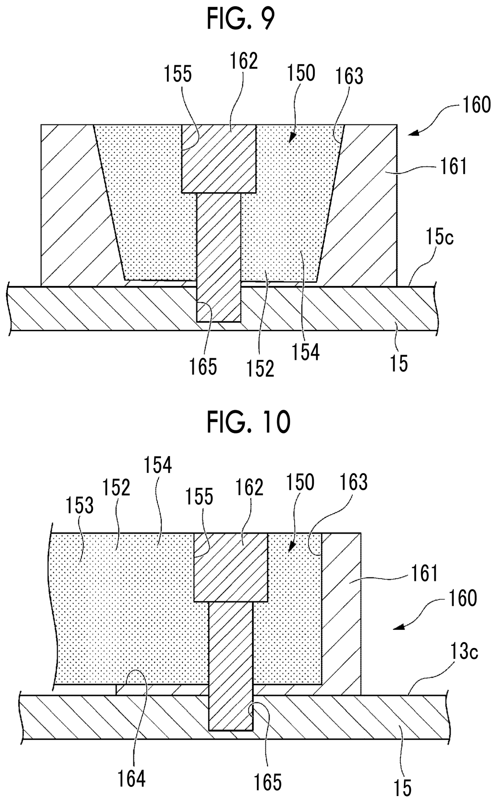

Next, a modification example of the first embodiment will be described with reference to Figs. 6 to 10.

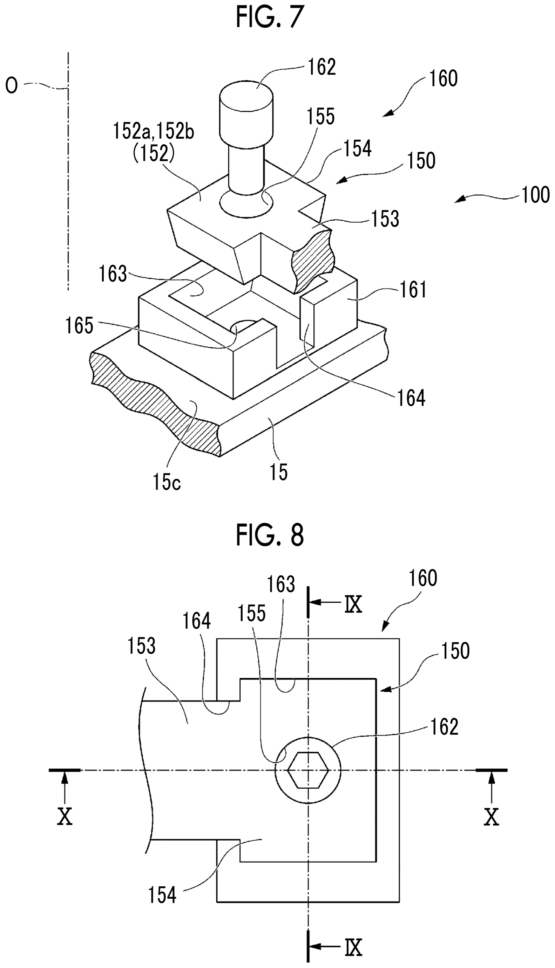

In Fig. 6, the elastic body 150 of the modification example is omitted. In Fig. 7, the end portions 152 (first end 152a and second end 152b) of the elastic body 150 are shown. The attachment portion 154 of the end portion 152 is formed in a rectangular parallelepiped shape, and is formed to gradually taper toward the corresponding facing surface 15c in the axis O direction. An insertion hole 155 penetrating the attachment portion 154 in the axis O direction is formed in the attachment portion 154.

Further, as shown in Figs. 7 to 10, in the modification example, the joining portion 160 includes a joining portion body 161 and a screw portion 162.

The joining portion body 161 is provided on the facing surface 15c of the joint plate 15. The joining portion body 161 is molded in a rectangular parallelepiped shape and protrudes in the axis O direction toward the adjacent elastic bodies 150. The joining portion body 161 includes a fitting groove 163, an opening 164, and a fastening hole 165.

The fitting groove 163 is open toward the corresponding elastic body 150 in the axis O direction. The fitting groove 163 is formed in a rectangular shape as viewed from the axis O direction. In addition, the cross-sectional shape of the fitting groove 163 is formed to be tapered toward the joint plate 15 side. The attachment portion 154 of the elastic body 150 is fitted into the fitting groove 163 from the axis O direction.

The opening 164 is formed on a side surface of the joining portion body 161 that is on the radial outer side. The opening 164 is open toward the radial outer side and communicates with the fitting groove 163. A connecting portion 153 of the end portion 152 is disposed in the opening 164.

The fastening hole 165 is formed in the bottom portion of the fitting groove 163. The fastening hole 165 is provided at a position overlapping the insertion hole 155 of the elastic body 150 in the axis O direction, and is open toward the axis O direction.

The screw portion 162 is inserted into the insertion hole 155 of the elastic body 150 and the fastening hole 165 of the joining portion body 161. The tip of the screw portion 162 is fastened to the fastening hole 165. In this way, the screw portion 162 fastens the end portion 152 fitted into the fitting groove 163 in the axis O direction.

### (Operation and Effect)

Hereinafter, the operation and effect of the present modification example will be described.

In the present modification example, the joining portion 160 includes the joining portion body 161 and the screw portion 162. The joining portion body 161 is provided on the surface (facing surface 15c) of the joint plate 15. Further, the joining portion body 161 has the fitting groove 163 into which any one of the first end 152a and the second end 152b of the elastic body 150 is fitted from the axis O direction. The screw portion 162 fastens any one of the first end 152a and the second end 152b of the elastic body 150 fitted in the fitting groove 163 in the axis O direction.

In this manner, it is possible to suppress the elastic body 150 from being shifted in the radial direction. Therefore, it is possible to reliably prevent the extending portion 151 of the elastic body 150 from moving to the radial inner side and coming into contact with the joint plates 15 on both sides in the axis O direction. Therefore, according to the present embodiment, the displacement in the axis O direction can be more satisfactorily absorbed.

In the present modification example, the fitting groove 163 is formed in a rectangular shape as viewed from the axis O direction, and the cross-sectional shape of the fitting groove 163 is formed to be tapered toward the joint plate 15 side. However, the present disclosure is not limited thereto. The fitting groove 163 may be formed in a shape into which the end portion 152 of the elastic body 150 is fitted, and for example, may be formed in a circular shape as viewed from the axis O direction, and the cross-sectional shape of the fitting groove 163 may be formed so that the width is constant.

### <Second Embodiment>

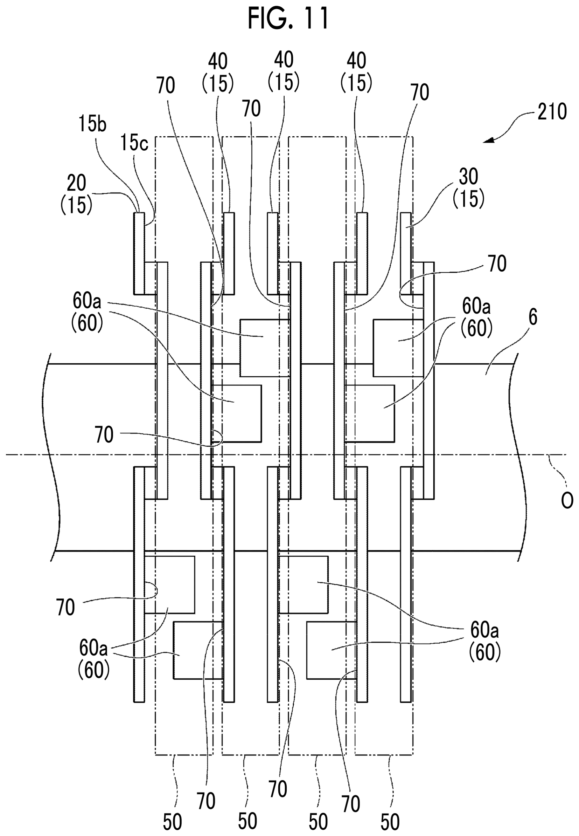

Hereinafter, a power transmission joint 210 according to a second embodiment of the present disclosure will be described with reference to Fig. 11. The same configurations as those in the first embodiment described above are designated by the same names and the same reference signs, and descriptions thereof will be appropriately omitted.

Fig. 11 is a drawing corresponding to Fig. 5 of the first embodiment, and in Fig. 11, the shape of the joint plate 15 and the arrangement of the joining portions 60 are schematically shown, and the position of the elastic body 50 is shown by a virtual line.

As shown in Fig. 11, in the present embodiment, one of the pair of joint plates 15 has a recessed portion 70 at a position facing the joining portion 60 provided in the other joint plate 15. The recessed portion 70 is recessed in a direction away from the facing joining portion 60 in the axis O direction.

Two recessed portions 70 that are open to one side in the axis O direction and two recessed portions 70 that are open to the other side in the axis O direction are formed in each of the joint plates 15. In each of the joint plates 15, with the axis O as the center, the recessed portion 70 that is open to one side in the axis O direction is formed in a range of 0 degrees to 90 degrees and in a range of approximately 180 degrees to 270 degrees, and the recessed portion 70 that is open to the other side in the axis O direction is formed in a range of approximately 90 degrees to 180 degrees and in a range of approximately 270 degrees to 360 degrees. Further, the adjacent joint plates 15 are disposed to be rotated about the axis O by approximately 90 degrees such that the recessed portions 70 opening in opposite directions to each other overlap each other in the axis O direction. The joining portions 60 disposed on the facing surfaces 15c on opposite sides and adjacent to each other in the circumferential direction are disposed in a space formed by two recessed portions 70 that are open in opposite directions and overlap each other in the axis O direction.

### (Operation and Effect)

Hereinafter, the operation and effect of the present embodiment will be described.

In the present embodiment, one of the pair of joint plates 15 has the recessed portion 70 at a position facing the joining portion 60 provided in the other joint plate 15. The recessed portion 70 is recessed in a direction away from the facing joining portion 60 in the axis O direction.

In this manner, it is possible to suppress the contact of the joining portion 60 with the joint plate 15 facing the axis O direction. Therefore, according to the present embodiment, the displacement in the axis O direction can be more satisfactorily absorbed. Further, it is possible to suppress an increase in size of the power transmission joint 210.

### <First Modification Example of Second Embodiment>

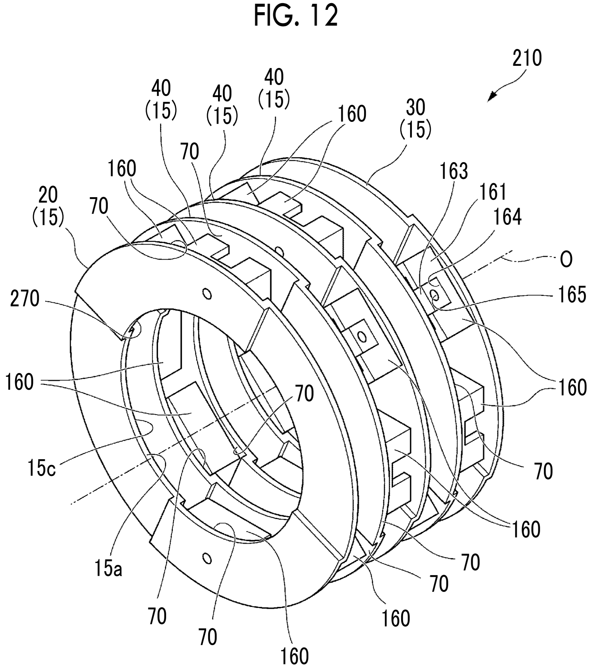

Subsequently, a first modification example of the second embodiment will be described with reference to Fig. 12.

The power transmission joint 210 may include the elastic body 150 and the joining portion 160, as in the modification example of the first embodiment. In Fig. 12, as in Fig. 6, the elastic body 150 of the modification example is omitted.

In the present modification example, two recessed portions 70 are formed along the outer peripheral edge portion 15b of the joint plate 15 in the circumferential direction. In addition to the joining portion 160 provided in the joint plate 15 in which the recessed portion 70 is formed, the joining portion 160 provided in the adjacent joint plate 15 is also disposed in the space in each recessed portion 70. In this manner, it is possible to suppress the contact of the joining portion 160 with the joint plate 15 facing in the axis O direction while suppressing an increase in size of the power transmission joint 210 in the axis O direction.

### <Second Modification Example of Second Embodiment>

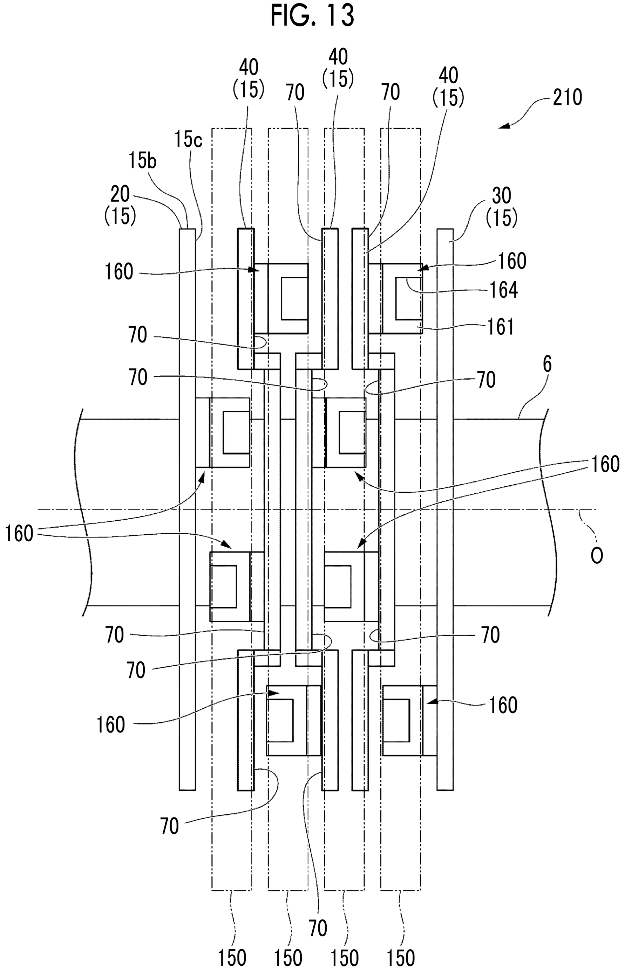

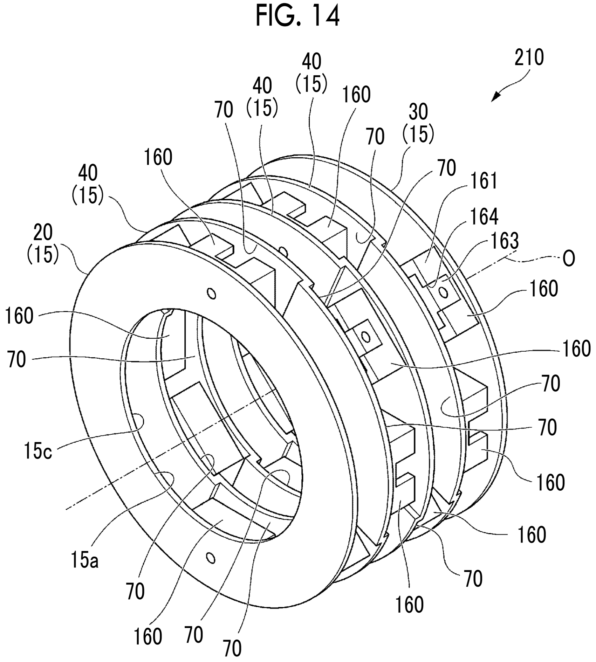

Next, a second modification example of the second embodiment will be described with reference to Figs. 13 and 14.

Fig. 13 is a drawing corresponding to Fig. 5 of the first embodiment and Fig. 11 of the second embodiment, and in Fig. 13, the shape of the joint plate 15 and the arrangement of the joining portions 160 are schematically shown, and the position of the elastic body 150 is shown by a virtual line. In addition, in Fig. 14, as in Figs. 6 and 12, the elastic body 150 is omitted.

As in the present modification example, as shown in Figs. 13 and 14, the motor-side joint plate 20 and the axle-side joint plate 30 at both ends in the axis O direction among the plurality of joint plates 15 may not be provided with the recessed portion 70. That is, the motor-side joint plate 20 and the axle-side joint plate 30 may be formed in a flat plate shape without any irregularities, as in the first embodiment.

In this case, the motor-side joint plate 20 and the axle-side joint plate 30 are easily manufactured, and manufacturing efficiency is improved. In addition, since the motor-side joint plate 20 and the axle-side joint plate 30 are reduced in size in the axis O direction, the entire power transmission joint 210 can be reduced in size in the axis O direction.

### (Other Embodiments)

The embodiments of the present disclosure have been described above in detail with reference to the drawings. However, specific configurations are not limited to the embodiments, and include a design modification or the like within a scope which does not depart from the gist of the present disclosure.

In the above-described embodiment, a case where the power transmission joints 10 and 210 are used in a railway vehicle has been described. However, the present disclosure is not limited thereto. The power transmission joints 10 and 210 may be used in, for example, an electric assist bogie used for pushing when a forklift or a person carries a heavy object, or may be used in a device other than a vehicle.

In the above-described embodiment, the joint plate 15 is formed in an annular shape as viewed from the axis O direction. However, the present disclosure is not limited thereto. For example, the outer peripheral edge portion 15b of the joint plate 15 may be formed in a polygonal shape or may be formed in an elliptical shape. In addition, although the outer peripheral edge portions 15b of the plurality of joint plates 15 are formed to have substantially the same length, the lengths of the outer peripheral edge portions 15b of the joint plates 15 may be different from each other.

In the above-described embodiment, a case has been described where the two elastic bodies 50 and 150 are provided at the position in the axis O direction between the pair of adjacent joint plates 15. However, the present disclosure is not limited thereto. The number of the elastic bodies 50 and 150 provided at the position in the axis O direction between the pair of adjacent joint plates 15 may be one or may be a plurality of three or more.

In the above-described embodiment, the extending portion 51 of the elastic body 50 is a leaf spring having a plate thickness in the radial direction. However, the present disclosure is not limited thereto. The extending portion 51 may be elastically deformable, and may be formed in a string shape, for example.

In the above embodiment, the joining portions 60 and 160 are provided on the facing surfaces 15c of the pair of joint plates 15. However, the present disclosure is not limited thereto. For example, the joining portions 60 and 160 may be provided in the outer peripheral edge portion 15b of the joint plate 15.

### <Appendix>

The power transmission joint 10 and 210 described in each embodiment is understood, for example, as follows.

(1) A power transmission joints 10 and 210 according to a first aspect that connect a drive shaft 4 configured to rotate by receiving driving of a motor 3 including a rotor 3a and a driven shaft that is at least partially disposed at a position spaced apart from the drive shaft in an axis O direction of the drive shaft 4, the power transmission joints 10 and 210 include a plurality of joint plates 15 that each extend in a planar shape in a direction perpendicular to an axis O and that are provided at intervals in the axis O direction, elastic bodies 50 and 150 that are each provided at a position in the axis O direction between facing surfaces 15c of a pair of the joint plates 15 adjacent to each other, and joining portions 60 and 160 that is provided in each of the joint plates 15 and that joins the joint plate 15 and the elastic bodies 50 and 150 to each other, in which among the plurality of joint plates 15, the joint plate 15 that is closest to the motor 3 in the axis O direction is fixed to the drive shaft 4, and the joint plate 15 that is farthest from the motor 3 in the axis O direction is fixed to the driven shaft, and the elastic bodies 50 and 150 include an extending portion 51 that extends along outer peripheral edge portions 15b of the pair of joint plates 15 on a radial outer side of the axis O with respect to the pair of joint plates 15, first end 52a and 152a that are provided on one side in an extending direction of the extending portion 51 and that are joined to one of the pair of joint plates 15 by the joining portions 60 and 160, and second end 52b and 152b that are provided on the other side in the extending direction of the extending portion 51 and that are joined to the other of the pair of joint plates 15 by the joining portions 60 and 160.

An example of the driven shaft is the axle 6 described above.

Accordingly, the extending portions 51 of the elastic bodies 50 and 150 are deformed in the axis O direction, so that the displacement in the axis O direction can be absorbed. Further, the extending portion 51 is located on the radial outer side with respect to the joint plate 15. Therefore, it is possible to suppress the contact with the pair of joint plates 15 located on both sides in the axis O direction at the time of deformation.

(2) The power transmission joints 10 and 210 of a second aspect are the power transmission joints 10 and 210 of the first aspect, in which the joining portions 60 and 160 may be provided on the facing surface 15c of the joint plate 15.

Accordingly, the joining portions 60 and 160 can be reduced in size in the radial direction as compared with a case where the joining portions 60 and 160 are provided on the outer peripheral side of the joint plate 15.

(3) The power transmission joint 210 of a third aspect is the power transmission joint 210 of the second aspect, in which one of the pair of joint plates 15 may have a recessed portion 70 at a position facing the joining portions 60 and 160 provided in the other joint plate 15, and the recessed portion 70 may be recessed in a direction away from the facing joining portions 60 and 160 in the axis O direction.

In this manner, it is possible to suppress the contact of the joining portions 60 and 160 with the joint plate 15 facing the axis O direction. Further, since it is not necessary to separate the joint plates 15 from each other in the axis O direction, the joint plates 15 can be reduced in size in the axis O direction.

(4) The power transmission joints 10 and 210 of a fourth aspect are the power transmission joints 10 and 210 of the second or third aspect, in which the joining portion 60 may be a pin 60a extending in the axis direction, and the first end 52a and the second end 52b may include an insertion hole 55 into which the joining portion 60 is inserted.

Accordingly, the joining portions 60 and 160 and the elastic body 50 can have a simple structure. Therefore, manufacturing efficiency can be improved and manufacturing costs can be reduced.

(5) The power transmission joints 10 and 210 of a fifth aspect are the power transmission joints 10 and 210 of the second or third aspect, in which the joining portions 60 and 160 may include a joining portion body 161 that is provided on the facing surface 15c of the joint plate 15 and that has a fitting groove 163 into which any one of the first ends 52a and 152a and the second ends 52b and 152b of the elastic bodies 50 and 150 is fitted from the axis O direction, and a screw portion 162 that fastens any one of the first ends 52a and 152a and the second ends 52b and 152b of the elastic bodies 50 and 150 fitted into the fitting groove 163 from the axis O direction.

In this manner, it is possible to suppress the elastic bodies 50 and 150 from being shifted in the radial direction. Therefore, it is possible to reliably prevent the extending portions 51 of the elastic bodies 50 and 150 from moving to the radial inner side and coming into contact with the joint plates 15 on both sides in the axis O direction.

### Industrial Applicability

With the power transmission joint of the present disclosure, the torque of the motor can be favorably transmitted to the driven shaft while favorably absorbing the displacement of the driven shaft.

### Reference Signs List

1: Vehicle
1a: Vehicle body
2: Bogie
2a: Bogie frame
2b: Bottom portion
3: Motor
3a: Rotor
4: Drive shaft
4a: Inner peripheral surface
4b: Outer peripheral surface
6: Axle (driven shaft)
6b: Outer peripheral surface
7: Wheel
8: Axle spring
10: Power transmission joint
15: Joint plate
15a: Inner peripheral edge portion
15b: Outer peripheral edge portion
15c: Facing surface
20: Motor-side joint plate
20a: Inner peripheral edge portion
30: Axle-side joint plate (driven shaft-side joint plate)
30a: Inner peripheral edge portion
35: Fixed cylinder
35a: Inner peripheral surface
35b: Outer peripheral surface
40: Intermediate body
40a: Inner peripheral edge portion
50: Elastic body
51: Extending portion
52: End portion
52a: First end
52b: Second end
53: Connecting portion
54: Attachment portion
55: Insertion hole
60: Joining portion
60a: Pin
150: Elastic body
152: End portion
152a: First end
152b: Second end
153: Connecting portion
154: Attachment portion
155: Insertion hole
160: Joining portion
161: Joining portion body
162: Screw portion
163: Fitting groove
164: Opening
165: Fastening hole
210: Power transmission joint
L: Rail
O: Axis

## Claims

1. A power transmission joint that connects a drive shaft configured to rotate by receiving driving of a motor including a rotor and a driven shaft that is at least partially disposed at a position spaced apart from the drive shaft in an axis direction of the drive shaft, the power transmission joint comprising:
a plurality of joint plates that each extend in a planar shape in a direction perpendicular to an axis and that are provided at intervals in the axis direction;
elastic bodies that are each provided at a position in the axis direction between facing surfaces of a pair of the joint plates adjacent to each other; and
a joining portion that is provided in each of the joint plates and that joins the joint plate and the elastic body to each other,
wherein among the plurality of joint plates, the joint plate that is closest to the motor in the axis direction is fixed to the drive shaft, and the joint plate that is farthest from the motor in the axis direction is fixed to the driven shaft, and
the elastic body includes
an extending portion that extends along outer peripheral edge portions of the pair of joint plates on a radial outer side of the axis with respect to the pair of joint plates,
a first end that is provided on one side in an extending direction of the extending portion and that is joined to one of the pair of joint plates by the joining portion, and
a second end that is provided on the other side in the extending direction of the extending portion and that is joined to the other of the pair of joint plates by the joining portion.

2. The power transmission joint according to claim 1,
wherein the joining portion is provided on the facing surface of the joint plate.

3. The power transmission joint according to claim 2,
wherein one of the pair of joint plates has a recessed portion at a position facing the joining portion provided in the other joint plate, and
the recessed portion is recessed in a direction away from the facing joining portion in the axis direction.

4. The power transmission joint according to claim 2 or 3,
wherein the joining portion is a pin extending in the axis direction, and
the first end and the second end include an insertion hole into which the joining portion is inserted.

5. The power transmission joint according to claim 2 or 3,
wherein the joining portion includes
a joining portion body that is provided on the facing surface of the joint plate and that has a fitting groove into which any one of the first end and the second end of the elastic body is fitted from the axis direction, and
a screw portion that fastens any one of the first end and the second end of the elastic body fitted into the fitting groove from the axis direction.
